# EUROPEAN PATENT APPLICATION

(11) **EP 3 975 074 A1**
(43) Date of publication of application: **30.03.2022**
(21) Application number: 20198883.9
(22) Date of filing: 29.09.2020
(51) Int. Cl.: G06N 20/00, G06Q 10/10, G05B 23/02, G06N 7/00, G06N 5/00

(54) **METHOD OF DETERMINING AN IMPROVED MACHINE LEARNING MODEL, AND USE OF SUCH A MODEL TO DETERMINE ATTRITION LEVEL**

(71) Applicant: ATOS SYNTEL, INC., Troy, MI 48083-1367 (US)
(72) Inventor: PATANKAR, Dheeraj, 411038 PUNE (IN)
(74) Representative: IPAZ

(57) **Abstract**

The invention concerns a method of creating an improved model of machine learning, the method being carried out by a processing unit and comprising the steps of:
- considering a plurality of machine learning algorithms and a training dataset,
- creating a plurality of machine learning models by applying each machine learning algorithm on the training dataset,
-selecting one of the machine learning models,
- applying a plurality of data engineering techniques on the selected machine learning model to improve performance,
- determining which data engineering techniques has the best performance; the data engineering technique which has the best performance associated with the selected machine learning model constitute the improved machine learning model,
- applying the improved machine learning model on a test dataset to validate the performance of the improved machine learning model.

## Description

### Background of the invention

The present invention concerns a method of creating an improved model of machine learning.

Employee attrition is a perennial problem in any organization. High employee turnover can result into large fluctuations in managing customer expectations sometimes even losing the entire business. While there are various analytical, hard or soft ways available to retain key employees, this idea focuses on finding the relevant features for an employee attrition and predicting potential attrition in advance.

This problem of attrition is also identified for apparatus. Indeed, it may be important to determine the lifetime of an apparatus. For some imposing and/or expensive apparatuses, it may be important to know the level of attrition to plan measures.

An object of the present invention is to provide a new way to determine an improved machine learning model.

Another object of the present invention is to provide a method of controlling attrition.

### Disclosure of the invention

These and other objects of the present invention are substantially achieved by providing a method of creating an improved model of machine learning, the method being carried out by a processing unit and comprising the steps of:
- considering a plurality of machine learning algorithms and a training dataset,
- creating a plurality of machine learning models by applying each machine learning algorithm on the training dataset,
- selecting one of the machine learning models,
- applying a plurality of data engineering techniques on the selected machine learning model to improve performance,
- determining which data engineering techniques has the best performance; the data engineering technique which has the best performance associated with the selected machine learning model constitute the improved machine learning model,
- applying the improved machine learning model on a test dataset to validate the performance of the improved machine learning model.

The present invention allows for determination of an improved machine learning model by a process comprising selection of best machine learning algorithm and data engineering technique.

Advantageously, the step of selecting one of the machine learning models comprises determining which machine learning model has the best performance. Indeed, in the present invention, the selection step can be a simply selection of one model randomly, based on any criterion, or a selection based on the performance.

According to an embodiment of the invention, the step of determining the best machine learning model may comprise a step of using sub-sampling training on each machine learning algorithms to determine performance.

For example, the sub-sampling training can be an under-sampling training or an over-sampling training.

The step of determining the best machine learning model can comprise a step of using hyperparameter values, i.e. for example tuning specific to each machine learning algorithm.

The step of determining the best machine learning model can comprise a step of testing against a validation dataset.

According to an advantageously embodiment of the invention, the training dataset, validation dataset and the test dataset can be determined from a common dataset which has been split into training dataset, validation and test dataset.

With the present invention, the training data, the validation data and the test data come from the same dataset. They are a partition of the common dataset.

If the step of testing against a validation dataset is not carried out, the common dataset is only split into training dataset and test dataset.

Advantageously, a baseline is created when applying the improved machine learning model on a test dataset to validate the performance of the improved machine learning model.

In particular, the plurality of machine learning algorithms can comprise at least one of the following algorithms: Logistic regression, Decision tree, Random forest, Naive bayes, KNN, Gradient boosting. According to the invention, training dataset passes through each algorithm used in the plurality of algorithms in order to create a model. All models created are the compared with each other to determine the one that has the best outcomes using the validation dataset and hyperparameter tuning. Of course the list is not exhaustive and a person of ordinary skill in the art can use others algorithms.

In particular, the plurality of data engineering techniques can comprise at least one of the following techniques: Outliers Removal, Feature Selection, Principal Component Analysis. The technique which better improves the machine learning model is retained to be associated with this model. Of course the list is not exhaustive and a person of ordinary skill in the art can use others techniques.

In particular, the method according to the invention can further comprise a step of publishing the improved machine learning model for testing on new dataset.

According to an advantageously embodiment of the invention, it is provided a use of the method of the invention for determining an attrition level of an apparatus or persons.

With the present invention, it is possible to determine the attrition, level of attrition or duration of attrition of an apparatus or a person.

Advantageously, in the case of a person, the method according to the invention is carried out and:
- the persons are employees and the common dataset comprises personal data of employees and data related to the work environment of the employees, and all data concern attrition cases or non-attrition cases;
- the machine learning model is trained with respect to training dataset of employees, this training dataset is a random selection of attrition and non-attrition cases of employees;
- the step of validating the performance comprises applying the improved machine learning model on the test dataset to determine the level of attrition of employees.

Advantageously, in the case of an apparatus, the method according to the invention is carried out and:
- the common dataset comprises technical parameters of apparatuses and data related to the operation environment of the apparatuses, and all data concern attrition cases or non-attrition cases;
- the machine learning model is trained with respect to the training dataset of apparatuses, this training dataset is a random selection of attrition and non-attrition cases of apparatuses;
- the step of validating the performance comprises applying the improved machine learning model on the test dataset to determine the level of attrition of a set of apparatuses.

With the present invention, an improved machine learning model is determined from a common dataset comprising internal data of the employee or the apparatus, and environment around the employee or the apparatus.

Internal data for an employee may comprise age, marital status, address,

Environment data for an employee may comprise total working years, years with current manager, years in current role,...

Internal data for an apparatus may comprise age, technical features, capacity, energy consumption, ...

Environment data for an apparatus may comprise climatic constraint (machine installed outside or inside), mode of use, frequency of use, number of breakdowns,...

Several dozen parameters can be predetermined and included in the common dataset.

According to another aspect of the invention, it is proposed a computer program comprising instructions which, when the program is executed by a processing unit, cause the processing unit to carry out the steps of the method as described above.

The invention also concerns a non-transitory computer-readable storage medium encoded with computer-executable instructions which, when executed, perform the method as described above.

### Brief Description of the Drawings

Further advantages and characteristics of the invention will become apparent on examining the detailed description of an embodiment, which is in no way limitative, and the attached drawings, in which:
Figure 1 is a schematic diagram of an illustrative a computer system suitable for implementation of a method according to the invention,
Figure 2 is a simplified diagram illustrating some steps of the method according to the invention,
Figure 3 is a schematic view of an example of technical architecture to implement the invention,
Figure 4 is a schematic view of a repartition of the common dataset.

### Detailed Description

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the scope of the present invention as defined by the appended claims.

Hereinafter, the present invention will be described in detail by explaining exemplary embodiments of the invention with reference to the attached drawings.

In accordance with the preferred embodiment, the method according to the invention relates to the following materials and processes:
Embodiments herein include computer-implemented methods, tangible non-transitory computer-readable mediums, and systems. The computer-implemented methods may be executed, for example, by a processor that receives instructions from a non-transitory computer-readable storage medium. Similarly, a system described herein may include at least one processor and memory, and the memory may be a non-transitory computer-readable storage medium. As used herein, a non-transitory computer-readable storage medium refers to any type of physical memory on which information or data readable by a processor may be stored. Examples include random access memory (RAM), read-only memory (ROM), volatile memory, nonvolatile memory, hard drives, CD ROMs, DVDs, flash drives, disks, and any other known physical storage medium. Singular terms, such as "memory" and "computer-readable storage medium," may additionally refer to multiple structures, such a plurality of memories and/or computer-readable storage mediums. As referred to herein, a "memory" may comprise any type of computer-readable storage medium unless otherwise specified. A computer-readable storage medium may store instructions for execution by a processor, including instructions for causing the processor to perform steps or stages consistent with an embodiment herein. Additionally, one or more computer-readable storage mediums may be utilized in implementing a computer-implemented method. The term "computer-readable storage medium" should be understood to include tangible items and exclude carrier waves and transient signals.

The present invention concerns a method to determine an improved machine learning model, and for example a method to control attrition of an employee or an apparatus.

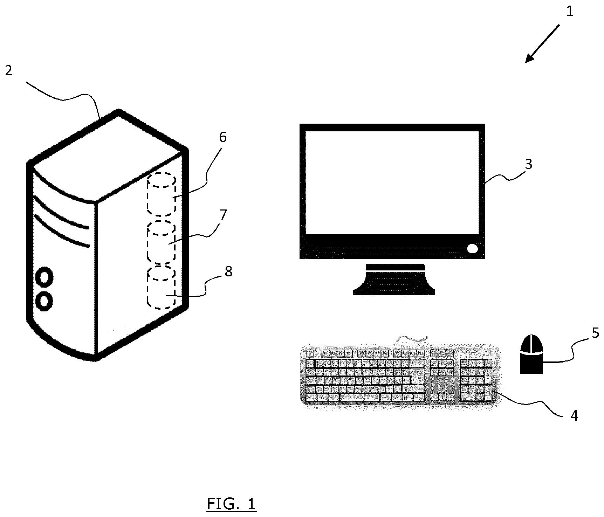

Figure 1 shows a computer system 1 comprising a server 2, a display 3 and input devices 4 and 5. The casing comprises among other components a central processing unit (CPU) 6, a memory 7 coupled to the CPU; and a computer readable storage medium 8 coupled to the CPU, the storage medium containing instructions that are executed by the CPU via the memory to implement the method according to the invention.

Although the invention is not limited thereto, here after will now described the method according to the invention applied to the control of employee attrition. But the same method can also be applied to the control of an apparatus attrition.

Employee attrition happens for various reasons such as performance rating, salary, increments, total working years, years with current manager, years in current role, marital status, age, job Involvement or a combination of features. The present allows for creation of an algorithmic model to explore past attrition data and provide a classification method to predict if an employee may leave the organization. The human resources (HR) and business team then can mitigate such risks with appropriate control and "tweaking" the features relevant on a case-to-case basis

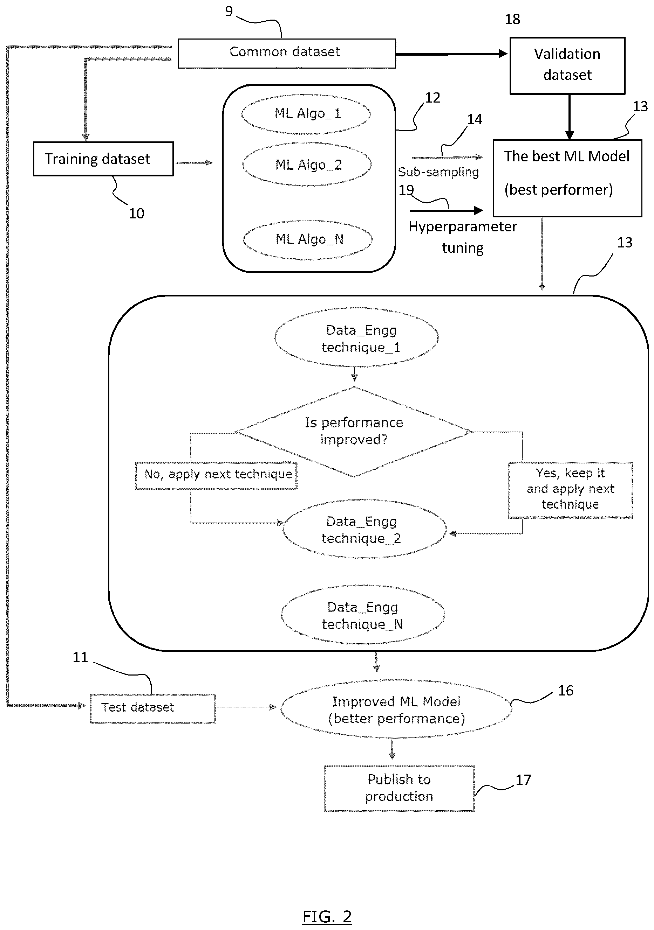

Figure 2 illustrates a data flow according an embodiment of the invention. The employee data available over a period are gathered into a common dataset 9. This common dataset includes as many governing parameters available per employee.

It contains 237 attrition cases out of a total of 1470 cases. The common dataset is imbalanced with just 16% of attrition data. There are 35 features (parameters) available in the common dataset.

For example, common dataset can be created using past years employee data. This could be an extract from one to one employee connect and/or reporting manager's inputs, appraisal, evaluation and/or through an exit interview. An example and non-exhaustive list of dependent parameters could be as follows: Age, Daily billing rate, Distance from home, Education, Environment satisfaction, Job involvement, Monthly income, Number of prior companies worked, Performance rating, Performance hike, Total working years, Training time, Stock option level, Total working years, Total years with RM, Work life balance, Years since last promotion, Years in current role, Years in the organization, Years with current manager, Business travel ready, Department, Education field, Marital Status, Gender, Overtime Work etc

The present invention is a method of creating an improved model of machine learning. This method is an improvement to computer's functionality.

The model determined can be applied to determine the level of attrition of an object. The attrition is not an abstract idea in so far as it concerns the wear or usury of the object. From a certain level of attrition, the place of the object has to be changed. This object can be a part of a machine, the attrition of which has to be determined to plan for a change. The object can be an employee or a customer, the attrition of which has to be measured to find the best place, at this time, for an employee or to further have following benefits for a customer:
- long term customer continuity
- high customer satisfaction
- large number of customers for new products/ offers
- year over year sustainable growth
- trust on the brand.

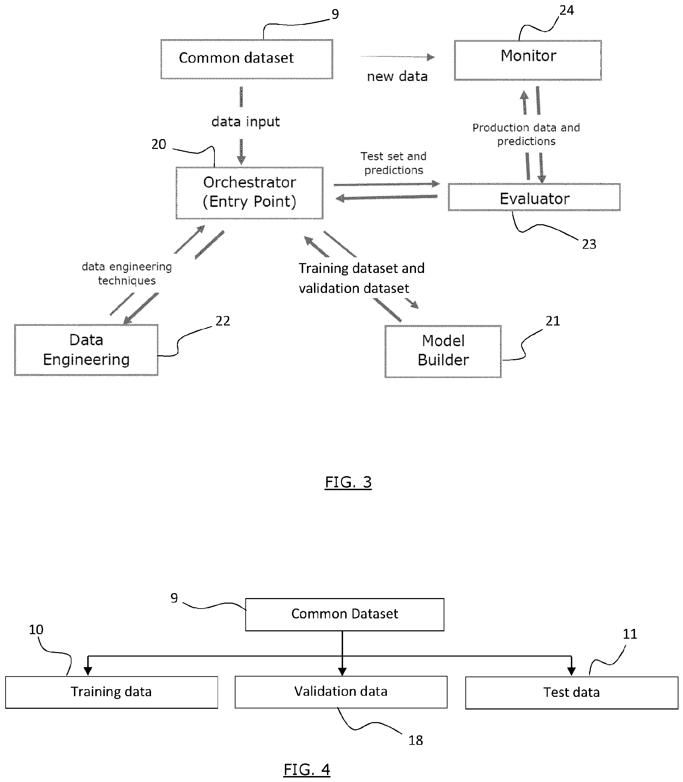

As illustrated on figure 4, the common dataset 9 is split only into training dataset 10, validation dataset 18 and test dataset 11.

Figure 2 shows a training step where the training dataset 10 passes through various machine learning algorithms ML algo_1 to ML algo_N to determine machine learning models.

Thereby, the training dataset 10 is used on step 12 to train a variety of ML algorithms such as Logistic regression, Decision tree, Random forest, Naive bayes, KNN, Gradient boosting etc.

The best performing algorithm 13, that is to say the best machine learning model is chosen using sub-sampling training 14, under-sampling or oversampling, hyper tuning parameters 19 and validation dataset 18;

At step 15, data engineering techniques are applied to improve the ML performance. For example, different data engineering techniques are used to check if the algorithm performance is improving.

Data_Engg_technique_1 to Data_Engg_technique_N as described on figure 2 can be data engineering techniques such as outliers removal, feature selection, principal component analysis etc.

If the model performance is better, then the technique is retained, else the next one is applied.

At the end of process 15, the best data engineering technique is retained and associated to the best machine learning model. The model thus determined is the improved machine learning model 16.

A validation step is performed by passing the test dataset 11 through the improved machine learning model.

The improved machine learning model is then published at step 17 for testing on new dataset in the production environment.

Finally, the improved machine learning model can be tested to check if the potential attrition cases can be retained.

On an operational mode, the improved machine learning model is fed with data of an employee to determine the attrition of this employee.

In the same way, concerning an apparatus, the improved machine learning can be determined and applied to data of a specific apparatus to determine when the apparatus has to be changed or which parameters can be modified to extend service life of the apparatus.

Figure 3 describes a technical architecture which can be embodied in a single computer, a server, several computers or severs, a network of computers or servers, or other electronic devices.

The technical architecture comprises following modules implemented as software applications in a single device or distributed in several devices:
Common dataset 9: the source dataset carrying information about the employees and various parameters.

Orchestrator 20: the central program to manage overall data flow to various core components of a ML system.

Model builder 21: the module that creates the machine learning model using sub-sampling training, under-sampling or oversampling, different hyperparameters and trains them using training dataset and validation dataset.

Data engineering 22: the module that applies various data engineering techniques to the source data and source them to model builder.

Evaluator 23: the module that evaluates trained model using test data, predicts outcomes and creates performance baselines.

Monitor 24: the module that tracks production data and tracks performance of trained models.

Accordingly, the present discloses a technical method that can be used across any industry domain to determine an improved machine learning model.

Numerous variations and modifications will become apparent to those skilled in the art once the above disclosure is fully appreciated.

## Claims

1. Method of creating an improved model of machine learning, the method being carried out by a processing unit and comprising the steps of:
- considering a plurality of machine learning algorithms and a training dataset,
- creating a plurality of machine learning models by applying each machine learning algorithm on the training dataset,
- selecting one of the machine learning models,
- applying a plurality of data engineering techniques on the selected machine learning model to improve performance,
- determining which data engineering techniques has the best performance; the data engineering technique which has the best performance associated with the selected machine learning model constitute the improved machine learning model,
- applying the improved machine learning model on a test dataset to validate the performance of the improved machine learning model.

2. Method according to claim 1, wherein the step of selecting one of the machine learning models comprises determining which machine learning model has the best performance.

3. Method according to claim 2, wherein the step of determining the best machine learning model comprises a step of using sub-sampling training on each machine learning algorithms to determine performance.

4. Method according to claim 3, wherein the sub-sampling training is an under-sampling training.

5. Method according to claim 3, wherein the sub-sampling training is an over-sampling training.

6. Method according to any of claims 2 to 5, wherein the step of determining the best machine learning model comprises a step of using hyperparameter values.

7. Method according to any of claims 2 to 6, wherein the step of determining the best machine learning model comprises a step of testing against a validation dataset.

8. Method according to claim 7, wherein the training dataset, the validation dataset and the test dataset are determined from a common dataset which has been split into training dataset, validation dataset and test dataset.

9. Method according to any of claims 1 to 6, wherein the training dataset and the test dataset are determined from a common dataset which has been split into training dataset and test dataset.

10. Method according to any of preceding claims, wherein a baseline is created when applying the improved machine learning model on a test dataset to validate the performance of the improved machine learning model.

11. Method according to any of preceding claims, wherein the plurality of machine learning algorithms comprises at least one of many available algorithms such as: Logistic regression, Decision tree, Random forest, Naive bayes, KNN, Gradient boosting.

12. Method according to any of preceding claims, wherein the plurality of data engineering techniques comprises at least one of many available techniques such as, Outliers Removal, Feature Selection, Principal Component Analysis.

13. Method according to any of preceding claims, wherein the method further comprises a step of publishing the improved machine learning model for testing on new dataset.

14. Use of a method as defined in any of the preceding claims, for determining an attrition level of an apparatus or persons.

15. Use according to claim 14, wherein
- the persons are employees and the common dataset comprises personal data of employees and data related to the work environment of the employees, and all data concern attrition cases or non-attrition cases;
- the machine learning model is trained with respect to training dataset of employees, this training dataset is a random selection of attrition and non-attrition cases of employees;
- the step of validating the performance comprises applying the improved machine learning model on the test dataset to determine the level of attrition of employees.

16. Use according to claim 14, wherein, for apparatus case,
- the common dataset comprises technical parameters of apparatuses and data related to the operation environment of the apparatuses, and all data concern attrition cases or non-attrition cases;
- the machine learning model is trained with respect to the training dataset of apparatuses, this training dataset is a random selection of attrition and non-attrition cases of apparatuses;
- the step of validating the performance comprises applying the improved machine learning model on the test dataset to determine the level of attrition of a set of apparatuses.

17. A computer program comprising instructions which, when the program is executed by a processing unit, cause the processing unit to carry out the steps of the method of one of claims 1 to 16.

18. A non-transitory computer-readable storage medium encoded with computer-executable instructions which, when executed, perform the method of one of claims 1 to 16.
